# EUROPEAN PATENT APPLICATION

(11) **EP 3 885 555 A1**
(43) Date of publication of application: **29.09.2021**
(21) Application number: 21161765.9
(22) Date of filing: 10.03.2021
(51) Int. Cl.: F02C 3/107

(54) **GAS TURBINE ENGINE**

(30) Priority: 26.03.2020 GB 202004382; 26.03.2020 GB 202004387; 26.03.2020 GB 202004385; 26.03.2020 GB 202004384; 26.03.2020 GB 202004386
(71) Applicant: Rolls-Royce plc, London N1 9FX (GB)
(72) Inventor: Bousfield, Ian, Derby, Derbyshire DE24 8BJ (GB); Hales, Michael, Derby, Derbyshire DE24 8BJ (GB)
(74) Representative: Rolls-Royce plc

(57) **Abstract**

A gas turbine engine (10) comprising an engine core (11) comprising high and low pressure compressors (14, 15) and high and low pressure turbines (17, 19), the high pressure compressor (14) and high pressure turbine (17) being coupled by a high pressure shaft (27), and the low pressure compressor (14) and low pressure turbine (17) being coupled by a low pressure shaft (26), the engine further comprising a fan (23) coupled to the low pressure shaft (27) by a reduction gearbox (30). The high pressure compressor (15) consists of 8 or 9 stages (42a-i) and has an average stage loading at cruise conditions of between 1.39 and 1.42, and the low and high pressure compressor (14, 15) together define an overall core pressure ratio at cruise conditions of between 40 and 60.

## Description

According to a first aspect there is provided a gas turbine engine comprising an engine core comprising high and low pressure compressors and high and low pressure turbines, the high pressure compressor and high pressure turbine being coupled by a high pressure shaft, and the low pressure compressor and low pressure turbine being coupled by a low pressure shaft, the engine further comprising a fan coupled to the low pressure shaft by a reduction gearbox, wherein the high pressure compressor consists of 9 stages and has an average stage loading at cruise conditions of between 1.39 and 1.42, and the low and high pressure compressor together define an overall core pressure ratio at cruise conditions of between 40 and 60.

It has been found by the inventors that this combination of features provides a highly efficient gas turbine engine, which has low overall blade count, while maintaining high stage efficiency.

The high pressure compressor may define a cruise overall pressure ratio of between 13:1 and 25:1, and preferably between 17:1 and 20:1. Consequently, the high pressure compressor provides for a majority of the pressure rise in the core. This contributes to the overall short length of the engine.

A final stage of the high pressure compressor may have a stage loading of between 1.15 and 1.25. It has been found that, in view of the relatively small diameter blades at the rear of the high pressure compressor (due to the compression provided by upstream stages), a relatively small amount of compression can be provided by an additional stage at the rear of the compressor, compared to an eight stage high pressure compressor. However, the relatively small size of an additional stage at this position gives rise to a relatively low weight overall, thereby reducing overall engine weight.

A first stage of the high pressure compressor may have a stage loading of between 1.4 and 1.6. Advantageously, by providing a first stage with a relatively high stage loading relative to the average stage loading, a high overall pressure ratio can be provided, since this large, high diameter stage can provide a higher pressure ratio. However, this must be balanced against the increased weight.

The high pressure compressor may comprise a cruise pressure ratio of between 17 and 25, and may be between 19 and 24.

The low pressure compressor may comprise a cruise pressure ratio of between 1.6 and 2.5.

The low pressure compressor may consist of two or three compressor stages.

The low pressure compressor may define an average stage loading of between 1.3 and 1.4, and may define an average stage loading of approximately 1.35.

The high pressure turbine may consist of one stage or two stages.

The low pressure turbine may consist of three stages or four stages.

According to an aspect there is provided a method of operating a gas turbine engine according to the first aspect, the method comprising, at cruise, operating the high pressure compressor to provide an average stage loading at cruise conditions of between 1.39 and 1.42, and the low and high pressure compressor together define an overall core pressure ratio at cruise conditions of between 40 and 60.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The gas turbine engine as described and/or claimed herein may have any suitable general architecture. For example, the gas turbine engine may have further shafts that connect turbines and compressors, for example three shafts.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressors. For example, the combustor may be directly downstream of (for example at the exit of) the high pressure compressor. By way of further example, the flow at the exit to the combustor may be provided to the inlet of the high pressure turbine. The combustor may be provided upstream of the turbines.

Each compressor stage may comprise a row of rotor blades and a row of stator vanes, which may be variable stator vanes (in that their angle of incidence may be variable). The row of rotor blades and the row of stator vanes may be axially offset from each other.

Similarly, each turbine may comprise any number of stages, for example multiple stages. Each stage may comprise a row of rotor blades and a row of stator vanes. The row of rotor blades and the row of stator vanes may be axially offset from each other.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall core pressure ratio of a gas turbine engine as described and/or claimed herein may be defined as the ratio of the stagnation pressure upstream of the low pressure compressor to the stagnation pressure at the exit of the highest pressure compressor (before entry into the combustor).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance - between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine in accordance with the present disclosure;
Figure 2 is a close up sectional side view of region X of the gas turbine engine of figure 1;
Figure 3 is a close up sectional side view of region Y of the gas turbine engine of figure 1; and
Figure 4 is a sectional front view of a gearbox of the gas turbine engine of figure 1.

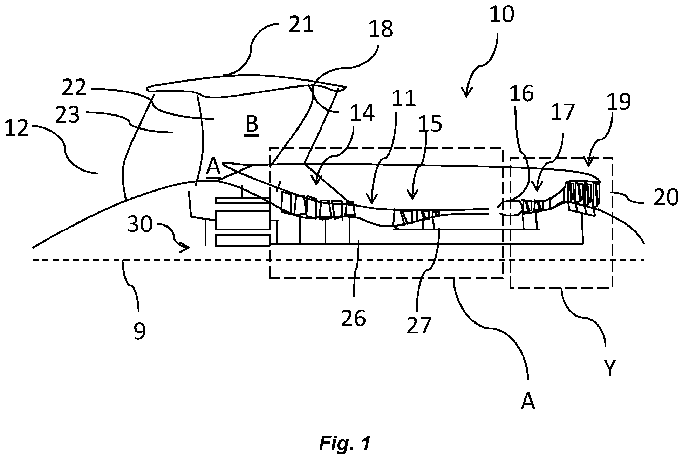

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30. The high pressure compressor 15 is attached to the high pressure turbine 19 by a high pressure shaft 27.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

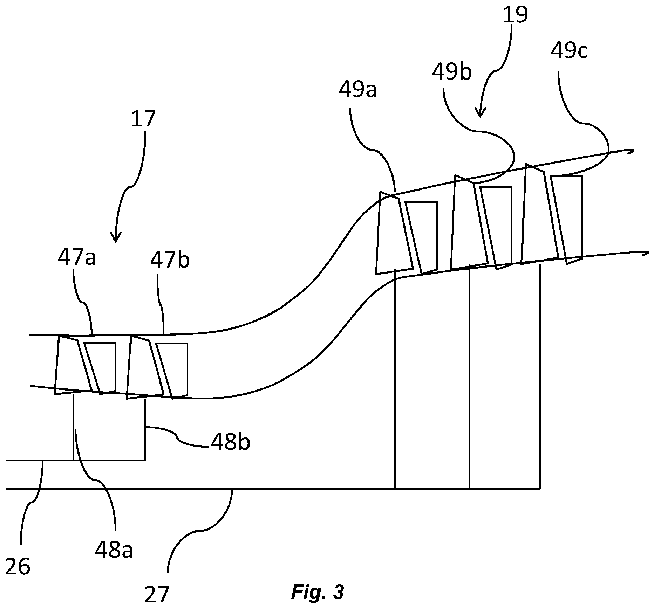

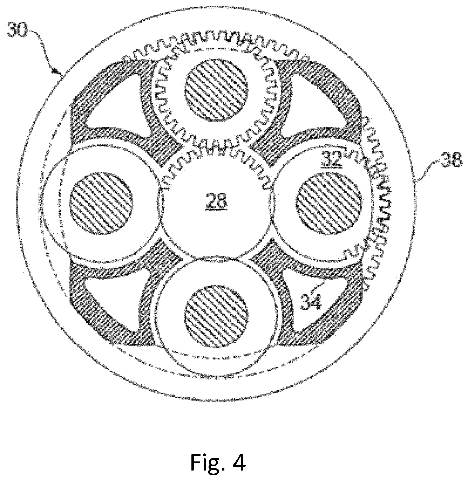

The epicyclic gearbox 30 is shown by way of example in greater detail in Figure 4. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in figure 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

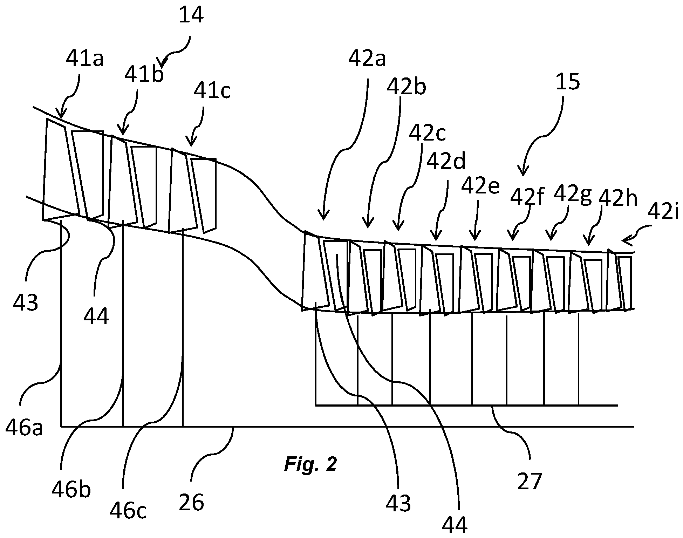

It will be appreciated that the arrangement shown in the figures is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figures 1 to 3. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

A front part of the engine 10 is shown in more detail in figure 2, and shows the low and high pressure compressors 14, 15 in more detail. As can be seen, each of the compressors 14, 15 comprises a multi-stage axial flow compressor.

The low pressure compressor 14 comprises exactly three stages 41a, 41b, 41c. Each stage 41a-c comprises a respective compressor rotor 43, and may comprise a respective stator 44. The rotor 43 and stator 44 are generally axially spaced. In the present case, the first rotor 42 is upstream of the first stator 44. One or more further stators such as an inlet stator (not shown) may be provided - however, since no addition rotor is provided, this does not constitute an additional stage. As will be appreciated by the person skilled in the art, the rotors 43 are coupled to the respective shaft (i.e. the low pressure shaft 26 in the case of the low pressure compressor 15) by corresponding discs 46a-c, and so turn with the shaft 26. On the other hand, the stators 44 are held stationary relative to the rotors 44. In some cases, the stators 44 may pivot about their long axes, to adjust the angle of attack and inlet and outlet area for the respective compressor stage. Such stators are known as "variable stator vanes" or VSVs.

The high pressure compressor 15 similarly consists of nine stages 42a-i, i.e. has neither fewer than nor more than nine stages. Of course, the compressor 15 typically comprises additional equipment (such as shafts, discs etc), but no more or fewer than nine stages. Again, each stage comprises at least one rotor 43, and optionally also a stator 44. Each rotor 42a-i is coupled to the high pressure shaft 27 via a respective drum (not labelled to aid clarity).

Between them, the high and low pressure compressors 14, 15 define an in use overall core pressure ratio (OPR) at cruise conditions. The core OPR is defined as the ratio of the stagnation pressure upstream of the first stage 44 of the low pressure compressor 15 to the stagnation pressure at the exit of the highest pressure compressor 16 (before entry into the combustor). The core OPR excludes any pressure rise generated by the fan 23 where the fan provides air flow to the core, so a total engine overall pressure ratio may be higher than the core OPR. In the present disclosure, the overall core OPR is between 40 and 60. In the described embodiment, the core OPR is 50, and may take any value between these upper and low bounds. For example, the core OPR may be any of 40, 45, 50, 55 and 60.

As will be understood, the core OPR will vary according to atmospheric, flight and engine conditions. However, the engine is typically designed to provide parameters at cruise conditions, as outlined above.

Referring now to figure 3, the turbine section (i.e. the region delineated in region Y in figure 1) is shown.

The turbine section comprises the high and low pressure turbines 17, 19. As can be seen, the turbines 17, 19 are again multi-stage. The high pressure turbine comprises two stages 47a, 47b, which are each coupled to the high pressure shaft 27 by respective turbine discs 48a, 48b. Again, a "turbine stage" can be defined in a similar manner to a compressor stage, in that it comprises at least one rotor, and optionally a stator.

Similarly, the low pressure turbine consists of three stages 49a-c, i.e. not more than three stages or fewer than three stages. Again, each stage consists of at least one turbine rotor.

As will be understood, a large design space must be considered when designing a gas turbine engine to determine an optimal engine with respect to a chosen metric (such as engine weight, cost, thermal efficiency, propulsive efficiency, or a balance of these). In many cases, there may be a large number of feasible solutions for a given set of conditions to achieve a desired metric.

One such variable is core OPR. As core OPR increases, thermal efficiency also tends to increase, and so a high OPR is desirable. Even once a particular OPR is chosen however, a number of design variables must be chosen.

One such design variable is the amount of pressure rise provided by the low pressure compressor 15 relative to that provided by the high pressure compressor 16 (sometimes referred to as "worksplit"). As will be understood, the total core OPR can be determined by multiplying the low pressure compressor pressure ratio (i.e. the ratio between the stagnation pressure at the outlet of the low pressure compressor by the stagnation pressure at the inlet of the low pressure compressor 15) by the high pressure compressor ratio (i.e. the ratio between the stagnation pressure at the outlet of the high pressure compressor 16 and the stagnation pressure at the inlet of the high pressure compressor 16). Consequently, a higher core OPR can be provided by increasing the high pressure compressor ratio, the low pressure compressor ratio, or both.

The inventors have found that a particularly efficient work split for a gas turbine engine having a core OPR in the above described range can be provided by providing a high pressure compressor 16 having a pressure ratio of between 17:1 and 25:1. In the present example, the high pressure compressor has a pressure ratio of approximately 20:1. It has been found to be difficult to provide a pressure ratio significantly greater than 25:1 on a compressor provided on a single shaft using current technology. Consequently, to provide the necessary core OPR, a low pressure compressor ratio of between 1.5:1 and 2.5:1 is required. In the present example, the low pressure compressor 15 has a pressure ratio of approximately 2:1, giving a core OPR of 40:1.

Similarly, there are a number of ways to increase the compressor pressure ratio. A first method is to increase the stage loading. Stage loading is defined as the stagnation pressure ratio across an individual stage (rotor and stator, or rotor only where the stage consists only of a rotor) of a compressor. A cruise stage loading will occur at engine conditions at which the cruise pressure ratio is achieved, as defined above. Similarly, an average stage loading can be defined as the sum of the stage loadings of each compressor stage of a compressor at such conditions, divided by the number of stages, or by the total stagnation pressure rise of the compressor divided by the number of stages. It has been found that a particularly beneficial balance of properties can be provided where the average stage loading of the high pressure compressor 15 at cruise conditions is between 1.39 and 1.42, where the high pressure compressor consists of nine stages, and the overall pressure ratio of the compressors 14, 15 is between 40 and 60.

The cruise stage loading can be determined by the designer by one or more of determining the rotor speed at the cruise compression conditions (high rotor speed leads to higher stage loading), determining the turning provided by the blades (more turning leads to higher stage loading), or determining the radius of the tips of the compressor rotors (higher radius blades result in higher stage loading), which in turn necessitates an increase in the radius of the roots of the compressor rotors to maintain a given flow area. Each of these options has associated advantages and disadvantages. For instance, increasing low pressure compressor rotor speed necessitates either an increase in the reduction ratio of the gearbox 30, or a reduction in the fan 23 radius, in order to maintain fan tip speeds at a desired level for noise and efficiency reasons. Similarly, increasing the high pressure compressor 15 rotor speed necessitates an increase in the high pressure turbine rotor 17 speed, which may result in the turbines materials exceeding their strength limits, or a reduction in turbine life. On the other hand, increasing the compressor tip radius necessitates an increase in weight, in view of the larger compressor discs that are required. Increased turning of the airflow may result in lower surge margin, and reduced efficiency. In any case, a higher stage loading may result in a lower efficiency, since the increased rotor tip speed or higher turning leads to lower compressor efficiencies, in view of losses associated with aerodynamic shocks as the tips significantly exceed the speed of sound.

A second option to increase compression ratios is to increase the number of stages in the respective compressors, thereby maintaining a low stage loading, low rotational speed, and low disc weight. Again, this can be achieved by adding a stage to either the low pressure compressor 15 or high pressure compressor 16. However, this will generally result in a higher weight and cost associated with the additional stage.

A further complication is the presence of the gearbox 30. The gearbox provides additional design freedom, since, as noted above, the gearbox reduction ratio can be selected to provide a preferred fan tip speed independently of both fan radius and low pressure compressor rotor speed. However, the gearbox also provides constraints in view of its large size. Consequently, the large radius required radially inward of the fan 23 inherent in a geared turbofan having an epicyclic gearbox dictates a fan 23 having a large hub radius, i.e. a large radial distance between the engine centre 9 and the aerodynamic root of the fan blades 23. Furthermore, in view of the relatively slow turning fan typical of geared turbofans, relatively little pressure rise is provided by the inner radius of the fan, and so geared turbofans tend to have a high hub to tip ratio.

The inventors have determined that a particular combination of compressor parameters can result in reduced engine weight, while providing a highly efficient, high pressure ratio core.

As noted previously, a low pressure compressor 15 having three compressor stages is chosen. In principle, any number of low and pressure compressor 15 stages could be chosen to provide the required OPR. However, the inventors have found that providing a low pressure compressor having three stages provides distinct advantages.

A relatively high stage count (nine stages) is chosen for the high pressure compressor 15, and a relatively low radius high pressure compressor 15 first stage rotor is chosen. This can be selected in view of the relatively high rotational speed of the high pressure shaft 27, to achieve a high pressure compressor 15 having a compression ratio of between 17:1 and 24:1.

A relatively high stage loading of between 1.39 and 1.42 is selected for the high pressure compressor 15. The high stage loading and high stage count can be achieved on a single shaft, in view of the use of a plurality of variable stator vanes, which enable stability of the compressor across a wide range of operating conditions, in spite of the high compression ratio. The stage loading is varied across the high pressure compressor, from a higher loading of between 1.4 and 1.6 at the first compressor stage 42a, to a lower loading of between 1.15 and 1.25 at the final stage 42i of the compressor 15.

In contrast, the same compression ratio (17:1 to 24:1) could in principle be achieved using eight compression stages (in an embodiment not in accordance with the present disclosure). Such a high pressure compressor would require a higher stage loading. The inventors have been found that, at these high compression loadings, an eight stage compressor would be unstable, leading to compressor stalls and surges at particular operating points. Consequently, additional measures would have to be taken (such as bleed valves, or operating the engine at higher idle speeds), which would result in lower overall engine efficiency. Alternatively, lower compressor margin would have to be accepted, which would result in shorter compressor life, as this deteriorates as the engine ages.

On the other hand, the same compression ratio could be achieved using ten high pressure compression stages (in an embodiment not in accordance with the present disclosure). However, the inventors have found that sufficient stability margin can be achieved with only nine stages, thereby avoiding the additional weight penalty associated with a tenth stage.

Similarly, the same higher overall compressor rate could in principle be achieved (in an embodiment not in accordance with the present disclosure) by altering the work split, such that the three stage low pressure compressor has a higher compression ratio. However, it has been found that a lower stage loading of a maximum of 1.35 can be tolerated by the three stage low pressure compressor at cruise conditions, before encountering instability and reduced efficiency, resulting in a maximum low pressure compressor pressure ratio at cruise conditions of approximately 2.5. Consequently, further low pressure compressor stages would be required (i.e. four or greater) to achieve the desired core OPR. In view of the larger mass of low pressure compressor stages, this is undesirable. Furthermore, in a geared, two shaft turbofan, the low pressure shaft drives both the fan and low pressure compressor. Consequently, it has been found that increasing the work performed by the low pressure compressor increases the load on the low pressure turbine, to the extent that further low pressure turbine stages are required. Consequently, by providing a high work high pressure compressor in place of a high work low pressure compressor, compressor mass is reduced (in view of the smaller size of high pressure compressor stages relative to low pressure compressor stages) and turbine mass is also reduced (in view of the reduction in the number of stages required).

Consequently, the above disclosed parameters of the gas turbine engine of the present disclosure, results in a highly efficient, lightweight engine.

Each of the above parameters can be varied throughout the disclosed ranges. For example, a gas turbine having the following parameters can be designed.

In a first example, a low pressure compressor is provided having three stages. A low pressure compressor cruise compressor ratio of 2.0 is selected.

A high pressure compressor having nine stages is selected. To achieve a desired core cruise overall pressure ratio of 48:1, a high pressure compressor pressure ratio of 24:1 is required. Consequently, a high pressure compressor average stage loading of 1.42 is required.

In a second example, a low pressure compressor having three stages and a compressor ratio at cruise conditions of 2.5 is selected.

A high pressure compressor having nine stages is again selected. To achieve a desired cruise core overall pressure ratio of 48:1, a high pressure compressor pressure ratio of 19:1 is required. Consequently, a high pressure compressor average stage loading of 1.39 is required.

In a third example, a low pressure compressor having three stages and a cruise compressor ratio of 2.5 is selected.

A high pressure compressor having nine stages is again selected. To achieve a desired cruise core overall pressure ratio of 60:1, a high pressure compressor pressure ratio of 24:1 is required. Consequently, a high pressure compressor average stage loading of 1.42 is required.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

## Claims

1. A gas turbine engine (10) comprising an engine core (11) comprising high and low pressure compressors (14, 15) and high and low pressure turbines (17, 19), the high pressure compressor (14) and high pressure turbine (17) being coupled by a high pressure shaft (27), and the low pressure compressor (14) and low pressure turbine (17) being coupled by a low pressure shaft (26), the engine further comprising a fan (23) coupled to the low pressure shaft (27) by a reduction gearbox (30), wherein the high pressure compressor (15) consists of 9 stages (42a-i) and has an average stage loading at cruise conditions of between 1.39 and 1.42, and the low and high pressure compressor (14, 15) together define an overall core pressure ratio at cruise conditions of between 40 and 60.

2. A gas turbine engine according to claim 1, comprising to claim 1, wherein the high pressure compressor (15) defines a cruise overall pressure ratio of between 13:1 and 25:1, and preferably between 17:1 and 20:1.

3. A gas turbine engine according to claim 1 or claim 2, wherein a final stage (42i) of the high pressure compressor (15) has a stage loading of between 1.15 and 1.25 at cruise conditions.

4. A gas turbine engine according to any of the preceding claims, wherein a first stage (42a) of the high pressure compressor (15) has a stage loading of between 1.4 and 1.6 at cruise conditions.

5. A gas turbine engine according to any of the preceding claims, wherein the high pressure compressor (15) comprises a cruise pressure ratio of between 17 and 25, and may be between 19 and 24.

6. A gas turbine engine according to any of the preceding claims, wherein the low pressure compressor (14) comprises a cruise pressure ratio of between 1.6 and 2.5.

7. A gas turbine engine according to any of the preceding claims, wherein the low pressure compressor (14) consists of two or three compressor stages (41a-c).

8. A gas turbine engine according to any of the preceding claims, wherein the low pressure compressor (14) defines an average stage loading at cruise conditions of between 1.3 and 1.4, and may define an average stage loading of approximately 1.35 at cruise conditions.

9. A gas turbine engine according to any of the preceding claims, wherein the high pressure turbine (17) consists of one stage or two stages (47a, 47b).

10. A gas turbine engine according to any of the preceding claims wherein the low pressure turbine (19) consists of three stages or four stages (49a-c).

11. A method of operating a gas turbine engine according to any of the preceding claims, the method comprising, at cruise, operating the high pressure compressor (15) to provide an average stage loading at cruise conditions of between 1.39 and 1.42, and the low and high pressure compressor (14, 15) together define an overall core pressure ratio at cruise conditions of between 40 and 60.
